# EUROPEAN PATENT SPECIFICATION

(11) **EP 3 579 533 B1**
(45) Date of publication and mention of the grant of the patent: **12.05.2021**
(21) Application number: 18176872.2
(22) Date of filing: 08.06.2018
(51) Int. Cl.: H04M 11/02, H04M 3/533, H04M 3/537, H04M 1/02, H04M 7/00, H04M 1/253

(54) **REMOTE AND CENTRALIZED VOICEMAIL SYSTEM BY MEANS OF VOIP CALLS**
ENTFERNTES UND ZENTRALISIERTES VOICEMAIL-SYSTEM MITTELS VOIP-ANRUFEN
SYSTÈME DE MESSAGERIE VOCALE CENTRALISÉE ET À DISTANCE AU MOYEN D'APPELS VOIP

(43) Date of publication of application: 11.12.2019
(73) Proprietor: CAME S.p.A., 31030 Dosson di Casier (TV) (IT)
(72) Inventor: ZANET, Tomas, 30023 CONCORDIA SAGITTARIA (IT)
(74) Representative: Savi, Massimiliano

(56) References cited:
- US-A1- 2015 029 335
- US-A1- 2015 326 729
- US-A1- 2017 272 269

## Description

### FIELD OF THE INVENTION

The present invention relates to a video intercom system for dwellings and other buildings.

### BACKGROUND ART

A video intercom system is an intercom system in which a video monitoring system is further integrated. Usually, a video intercom system comprises an external unit and a corresponding internal unit. The internal unit, in addition to the button panel and to the audio section comprising at least one microphone and a loudspeaker, also comprises a camera which may be suitably equipped with visible and/or infrared light lighting means to illuminate the scene and allow the vision of the scene itself in different outside lighting conditions.

The internal unit is equipped with a monitor which displays the image taken by the camera of the external unit. The monitor is often a display of the LCD type.

The video intercom system is usually activated only when a calling user presses a call button, and is deactivated after a certain predetermined time.

For privacy reasons, the image of the calling user is only visible on the monitor of the internal unit called.

Patent document US20150029335 describes a doorbell adapted to wirelessly communicate with a remotely located computing device.

Patent document US2017272269 describes a doorbell notification device for audio/video (A/V) recording adapted to communicate in a network.

Patent document US2015326729 describes user interfaces for phones and phone systems including one or a plurality of local client phones with basic call handling capability that communicate through a remote phone server.

In further detail, a video intercom system to be used at the entrance of a building, a dwelling, an office etc. usually comprises the following components: an external terminal, an internal terminal, a software application, for example for smartphones, associated and adapted to communicate with said internal terminal and said external terminal.

The external terminal is located mainly outside the dwelling or, more generally, outside the site the accesses of which are to be controlled. The external terminal may be of the analog or digital type and, in case it is of the digital type, it may also have a Voice over Internet Protocol (VoIP) client function. Furthermore, the external terminal may operate in audio and video mode or exclusively in audio mode and is also capable of receiving and making only audio calls or audio and video calls (video calls).

In certain types of systems, the external terminal may also be equipped with the VolP switchboard function.

The internal terminal is a terminal located inside the dwelling or building whose access control is designated to the video intercom system. It may be of the analog or digital type and, in case it is of the digital type, it may also have a VoIP client function. The internal terminal is capable of receiving and making calls. Furthermore, in certain types of systems, it may also be equipped with the VoIP switchboard function.

Typical examples of video intercom systems provide for, in the case of a single dwelling, an external terminal with a server function and one or more internal terminals with a VolP client function and possible apps for smartphones. In this case, the LAN inside the dwelling is a single one: the user network required for navigation (for example, the ADSL connection to the Internet) may be shared with the video intercom system.

Instead, in the case of multiple dwellings within an apartment block (for example, a building comprising a plurality of dwellings), the external terminal is shared between the residents of the individual apartments, each apartment has a private ADSL network while the backbone of the building is common and allows the external terminal to connect to the various apartments. In this scenario, therefore, there are different user LANs and one video intercom backbone network common to the whole apartment block. In this case, it is mandatory to have a receiver terminal capable of connecting both to the video intercom backbone of the apartment block and to the apartment LAN thereof. Therefore, such receiver terminal shall also have a VolP switchboard function, since it must be capable of receiving recordings from the user apps which would not be capable of being recorded at the external terminal when configured as a master.

The aforesaid software application, adapted to communicate with said internal terminal and with said external terminal - hereinafter referred to simply as app - may be, for example, compatible with the iOS operating system or with the Android operating system and is adapted to be installed on the smartphone of the user managing the video intercom system.

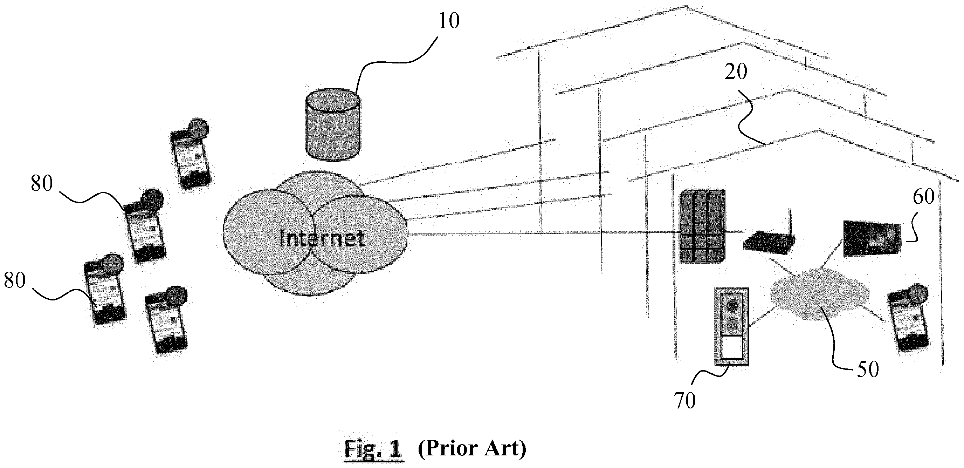

With reference to Figure 1, attached to the present application, in an example of installation in a dwelling 20 equipped with Internet connection and local network 50 to which communication devices and electrical appliances are usually connected, said app represents a VolP client capable of receiving and making calls from both the local network 50 and remotely by means of the telephone service data connection.

With such system, if a visitor rings at the door of a dwelling 20 and the tenant who is equipped with the user app on his or her telephone is away from home, he or she may still be notified by means of an audio-video VolP call. The call originating from the external terminal 70 arrives at the internal terminal 60 and also, simultaneously, at the app managed locally or remotely.

However, if the tenant is in an area not covered by the voice/data telephone connection field or has the smartphone 80 switched off or in air mode, the audio-video VolP call can not be received. In cases like this, therefore, the call is only received by the internal terminal and the user does not receive any notification or warning. Only upon returning home, the user will see the missed call at the internal terminal 60 and the possible audio-video message on the voicemail.

It is therefore clear the need of the market related to the technical field of video intercoms for access control, to have a video intercom system comprising a telephone or video-telephone voicemail service allowing to receive information relating to access requests received at the entrance where the video intercom system is installed, even during periods of time when the smartphone 80 of the user is switched off or not covered by the voice/data telephone signal field.

### SUMMARY OF THE INVENTION

These objects mentioned above, as well as other objects, which will become more apparent in the light of the following description, are achieved by means of a remote and centralized voicemail system in a remote and centralized voicemail system comprising an external terminal intended to be installed outside a dwelling, an internal receiver terminal intended to be installed inside said dwelling and provided with a VolP communication voicemail and associated with a push server, the system being configured to perform the following steps: receiving, by means of the internal receiver terminal, a call originating from the external terminal; sending, by means of the internal receiver terminal, to the external terminal an automatic answering message to the aforesaid call, in the case in which the aforesaid call is not answered by a user within a predetermined time interval; storing an audio/video message originating from the external terminal in a voicemail file; sending, by means of the push server, a push notification to the user (notification sent, for example, to the portable communication device - smartphone or tablet - of the user) to notify about the presence of the audio/video message in the voicemail file, said push notification comprising a dynamic telephone number to call to access the stored voicemail file; allowing the remote access by the user to the audio/video message in the voicemail file by means of a VolP call to the dynamic telephone number.

By virtue of the features of the invention, a remote and centralized video voicemail service may be implemented, adapted to be used, as well as locally, also by a user app, connected to a local or remote network. The remote user who is equipped with the user app on his or her smartphone may also activate and deactivate the voicemail service, see in real time who rings at the door and talk to him or her, and, furthermore, in case the smartphone is switched off or has no field coverage, the video intercom in accordance with the invention is adapted to send a message of absence to the visitor, inviting him or her to record an audio-video message.

In the presence of a recorded message, the remote user will receive a push notification informing him or her of the presence of the recording of a new message on the cloud server, as soon as the smartphone will be switched on again or the field coverage is regained.

The user may view, remotely, the voicemail file containing the audio-video message, if and when desired.

### BRIEF DESCRIPTION OF THE FIGURES

Objects and advantages of the present invention will become more apparent from the following detailed description of embodiments of the remote and centralized voicemail system in a VolP communication video intercom system and from the accompanying drawings, merely given by way of explanation and not by way of limitation, in which:
Figure 1 shows the diagram of a VolP communication video intercom system of the background art;
Figure 2 shows the diagram of a VolP communication video intercom system of the invention;
Figure 3 shows the diagram of a variant of the video intercom system of the invention.

The same reference numbers and the same reference letters in the Figures identify the same elements or components.

The component parts of the apparatus according to the present description have been represented in the drawings, where suitable, with conventional symbols, showing only those specific details which are pertinent to the understanding of the embodiments of the present invention, so as not to highlight details which will be immediately apparent, to the skilled in the art, with reference to the description given hereby.

### DETAILED DESCRIPTION OF PREFERRED EMBODIMENTS OF THE INVENTION

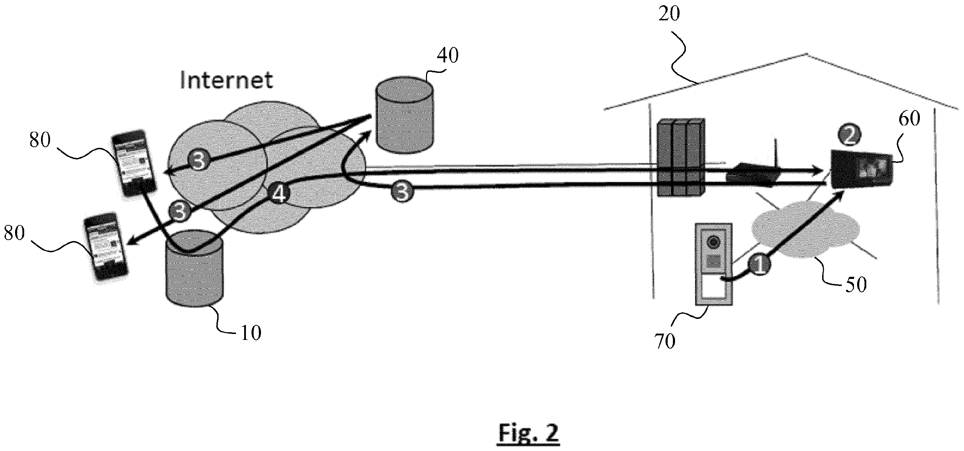

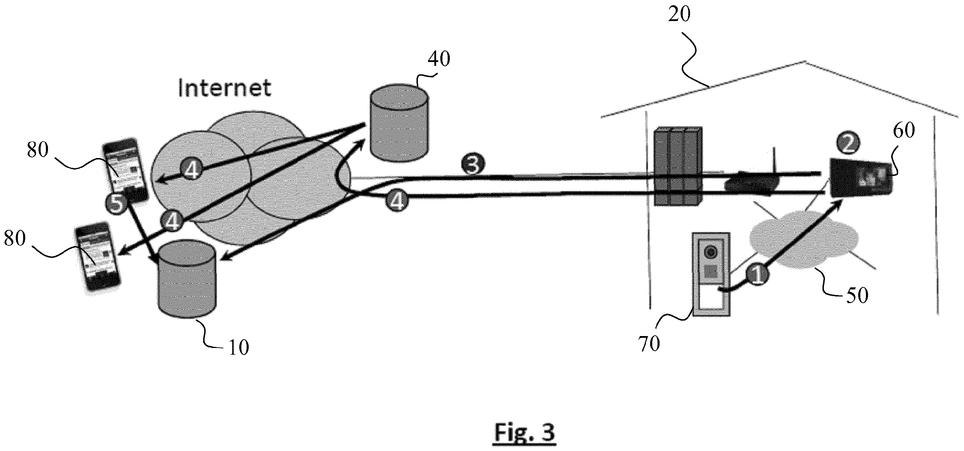

With particular reference to Figures 2 and 3, the video intercom system of the invention comprises a Cloud server 10 for video intercoms, also provided with a VolP switchboard function and adapted to make VolP recordings and act as a proxy for VolP communication telephone calls. Thereby the system comprises two VolP switchboards: one inside the dwelling 20 and the other at the cloud server 10. The first, local, VolP switchboard is in charge of receiving local recordings and of managing local calls. The second, remote, is in charge of receiving the recording of all the remote apps of the various systems and of managing calls from the dwellings to the apps and vice versa. The two switchboards are connected to each other, for example by means of a SIP trunk, i.e. a persistent connection inside an encrypted tunnel. Therefore, cloud server 10 will have as many connections as there are user installations.

The video intercom system of the invention further comprises an external PUSH server 40 (reachable by means of the Internet) adapted to receive http requests and to send PUSH notifications to the user apps according to methods known in the art.

Said PUSH notifications must obviously comply with the requisites provided for by the operating systems of the smartphones in which the app according to the present invention is installed, for example Android and iOS.

PUSH notifications, in manner known to the background art, are sent when there is a call for a particular user, such notification allows to reactivate the smartphone 80 of the user which may be in "inactive" status (standby or locked), a status in which it is not allowed to produce network traffic (therefore it is not possible to make VolP recordings) so as not to drain the battery of the smartphone 80. Therefore, the user app, on receiving such PUSH notification will exit the inactive status, will make the VolP recording to the server (local or remote) thereof and will then receive the VolP call destined thereto. According to the present invention, the push notification sent by the system also contains the dynamic number of the dial plan associated with the multimedia file, necessary to view the voicemail file by means of a VolP call.

Said cloud server 10 is further adapted to manage functions related to the so-called dial plan, functions which allow the user to view the remote voicemails by means of a VolP call to the dwelling thereof. In further detail, the dial plan tells the switchboard what to do when a call arrives in input to a particular extension, i.e. to a particular number which may be, but needs not be, a VolP number. This dial plan is present in all the switchboards and allows to dial preset number sequences, corresponding to predetermined users. Thus, for example, the number sequence 123 may be dealt to call the concierge, 0 may be dealt to call the reception of a hotel, etc.. In the case of the present invention, this dial plan shall be adapted to select the messages recorded in the audio-video voicemail and shall be dynamic since it will have to be updated each time a new voicemail message is created or an existing one is removed.

Dwellings of users are provided with a local communication network 50 which may, for example, be realized by means of wiring or by means of a wireless communication service such as, for example, Wi-Fi communication.

The video intercom system according to the present invention comprises, as described above, an internal terminal 60 and an external terminal 70, the internal terminal 60 is adapted to connect to the home network of the tenant user. By means of this connection, said internal terminal 60 is adapted to connect to the Internet. The connection of said internal terminal 60 to the Internet allows a persistent connection to be made with the aforesaid cloud server 10, for example, by means of a SIP trunk. User apps which want to receive and make remote calls shall connect to this cloud server 10 by means of an Internet connection made by means of Wi-Fi or by means of a telephone provider data connection.

The internal terminal of the system according to the present invention therefore comprises a VolP switchboard further adapted to read video files, in particular but not exclusively, of the mkv or of the dual encoding type (h264/G711). Furthermore, said internal terminal provides for the dial plan managing function or numbering plan described above. As mentioned, the dial plan managed by the internal terminal is of the dynamic type, so as to be updated each time a new voicemail message is created or an existing one is removed. By way of non-limiting example, on receiving a new audio-video message by means of the internal terminal 60, a vm001.mkv file is created by the internal terminal 60 itself. Correspondingly, the internal terminal 60 internally defines and stores an identification number of the message received, for example 009001, where 009 is the prefix indicating the voicemail message and 001 is the progressive numbering of such message.

Therefore, if a remote call arrives at the VolP switchboard of the internal terminal 60, with the number 009001, the switchboard will automatically answer the call and then execute the file vm001.mkv. Advantageously, said internal terminal 60 is further equipped with a function for synchronizing the message list on the apps and for synchronizing the deletion of video and audio messages.

The cloud server 10 also performs push server functions for VolP communication and is designed to send push notifications to user apps on smartphones 80 of users with iOS and Android operating systems, to notify when an audio message or a video message recorded in the remote voicemail is there. Advantageously, push notifications may also be sent for other services provided by the system in accordance with the invention, in addition to services relating to the video intercom system. For example, the system may be set to notify the user about an alarm related to security, about the activation of a home automation scenario, etc..

In a variant of the invention, a push server 40 is provided for separate from the cloud server 10, in another variant the push server 40 is integrated in the cloud server 10.

The preferred embodiment of the invention, shown in the diagram of Figure 2, provides for a centralized remote audio or audio-video voicemail service installed on the internal receiver terminal 60. The files containing the audio or audiovisual recording of a message left on the video intercom unit are therefore stored inside the dwelling of the customer, right in the internal receiver terminal 60. Such files containing the recordings made by the voicemail may be recalled by means of a command applied by the user app using VolP calls and may also be listened to and/or viewed by the user remotely.

In further detail, the voicemail system of the invention operates as follows.

After a visitor has made a call from the external terminal 70 (step 1) of the video intercom and no one has answered from the internal terminal 60 (step 2), if the voicemail is active, the internal terminal 60, after a certain timeout of a configurable length which preferably varies from 5 seconds to 30 seconds, automatically answers the call inviting the visitor to leave a message and, in case the visitor actually records a message, it stores the audio or video message originating from the external terminal 70 in a voicemail file. The voicemail file thus stored remains inside the internal terminal 60, inside the dwelling of the user.

Subsequently, so as to notify the user of the presence of this new file on the voicemail, a notification is sent by means of the push server 40 to the user app (step 3) which is specially configured to receive this type of push notifications. The push notification includes a special dynamic number (009001 in the example described above), related to the new video or audio message, a number to be called by means of a VolP call (step 4) by means of the cloud server 10, so as to view or listen to the voicemail file just stored in the internal terminal 60.

Furthermore, the user app in accordance with the invention is advantageously provided with a command function which allows the remote activation and deactivation of the remote and centralized voicemail and which is added to the usual local activation and deactivation function. Furthermore, by means of the user app, it is also possible to execute the function for synchronizing the list of video or audio messages.

The advantages of this solution are manifold. The multimedia audio or video file with the recording of the audio or video message remains inside the internal terminal 60 and therefore remains physically inside the dwelling of the user. No file transfer to the cloud server 10 occurs outside the dwelling of the user and therefore no possible violation of the privacy of the visitor who left a message on the voicemail is made. This solution is scalable as the number of customer systems increases and does not imply any costs for the storage in the cloud server. Since, preferably, a persistent connection of the SIP Trunk type is employed between the cloud server and the various dwellings, no NAT Traversal issue is created, i.e. it is not necessary to "enter" the home network remotely to retrieve or view the voicemail file. By means of a home router implementing a NAT system and firewall systems, it is generally very difficult or almost impossible to enter the home network from outside for obvious security reasons. Instead, by using a persistent SIP trunk connection, such issue may be remedied by allowing the app to remotely view the voicemail file by means of a simple VolP call.

With reference to Figure 3 attached to the present application, a further preferred embodiment of the present invention, an alternative solution shown diagrammatically in Figure. 3, is based on file transfer protocols such as sftp or scp. Such solution represents an alternative to the previous one to implement the remote voicemail. This alternative embodiment of the voicemail system in accordance with the invention operates as follows:
The voicemail file containing the video or audio message, after being stored (step 2) inside the receiver present inside the dwelling, is transferred to the cloud server 10 (step 3) by means of one of the secure file transfer protocols (sftp or scp).

Subsequently, so as to notify the final user of the presence of this new voicemail file, a push notification is sent to the user app (step 4) by means of the push server 40 which also in this variant may be both a server separate from the cloud server 10 or part thereof.

When the user wants to view such file remotely, he or she may retrieve this file from the cloud server 10 in which it has been stored (step 5).

This alternative solution, by means of sftp or scp stored on the cloud server 10, has fewer advantages with respect to the previous one, since the file with the video or audio message is physically transferred to the cloud server and is therefore subject to management in compliance with the privacy protection regulations in force. Furthermore, this embodiment is not scalable as the number of systems increases and incurs costs for storing the voicemail files in the cloud server 10.

The use of the system in combination with a smartphone 80 has been mentioned, however, the user may load his or her user app in any other equivalent device equipped with a telephone or data connection to the Internet, such as, for example, a tablet, a PC, etc..

Obviously, modifications or improvements may be made to the invention as described herein without departing from the scope of the invention as claimed below.

## Claims

1. A remote and centralized voicemail system comprising an external terminal (70) adapted to be installed outside a dwelling (20); an internal receiver terminal (60) adapted to be installed inside said dwelling (20) and provided with a VolP communication voicemail and associated with a push server (40), the system being configured to perform the following steps:
- receiving, by means of the internal receiver terminal (60), a call originating from the external terminal (70);
- sending, by means of the internal receiver terminal (60), to the external terminal (70) an automatic answering message to the aforesaid call, in the case in which the aforesaid call is not answered by a user within a predetermined time interval;
- storing an audio/video message originating from the external terminal (70) in a voicemail file;
- storing the voicemail file in the internal receiver terminal (60);
- sending a push notification to the user by means of the push server (40) to notify about the presence of the audio/video message in the voicemail file, said push notification comprising a dynamic telephone number to call to access the stored voicemail file, the system being further configured to allow the remote access by the user to the audio/video message in the voicemail file by means of a VolP call to the dynamic telephone number.

2. A voicemail system according to claim 1, wherein the voicemail file is stored in a cloud server (10).

3. A voicemail system according to any one of the preceding claims, wherein the push server (40) is integrated in the cloud server (10).

4. A voicemail system according to the preceding claim, wherein the voicemail system comprises a user app adapted to be installed on a smartphone (80).

5. A voicemail system according to the preceding claim, wherein the user app contains the voicemail activation and deactivation function.

6. A voicemail system according to the preceding claim, wherein the user app contains a function for synchronizing the list of video and audio messages.

7. A voicemail system according to the preceding claim, wherein the user app contains the dynamic number VolP call function.

## Patentansprüche

1. Entferntes und zentrales Voicemail-System, umfassend ein externes Endgerät (70), das zur Installation außerhalb einer Wohnung (20) geeignet ist; ein internes Empfängerendgerät (60), das zur Installation innerhalb der Wohnung (20) geeignet und mit einer VolP-Sprachbox ausgerüstet ist, sowie einem Push-Server (40) zugeordnet ist, wobei das System so konfiguriert ist, dass es folgende Schritte ausführt:
- Empfangen, mittels des internen Empfängerendgeräts (60), eines von dem externen Endgerät (70) ausgehenden Anrufs;
- Senden an das externe Endgerät (70), mittels des internen Empfängerendgeräts (60), einer automatischen Antwortnachricht auf den vorgenannten Anruf, falls der vorgenannte Anruf von einem Benutzer nicht innerhalb eines vorbestimmten Zeitintervalls beantwortet wird;
- Speichern in einer Voicemail-Datei einer von dem externen Endgerät (70) ausgehenden Audio-/Videonachricht;
- Speichern der Voicemail-Datei in dem internen Empfängerendgerät (60);
- Senden einer Push-Benachrichtigung an den Benutzer mittels des Push-Servers (40), um über das Vorhandensein der Audio-/Videonachricht in der Voicemail-Datei zu benachrichtigen, wobei die Push-Benachrichtigung eine dynamische Telefonnummer umfasst, die angerufen werden muss, um auf die gespeicherte Voicemail-Datei zugreifen zu können; das System ferner so konfiguriert ist, dass es über einen VolP-Anruf an die dynamische Telefonnummer, den Fernzugriff des Benutzers auf die Audio-/Videonachricht in der Voicemail-Datei ermöglicht.

2. Voicemail-System nach Anspruch 1, wobei die Voicemail-Datei auf einem Cloud-Server (10) gespeichert ist.

3. Voicemail-System nach irgendeinem der vorhergehenden Ansprüche, wobei der Push-Server (40) in den Cloud-Server (10) integriert ist.

4. Voicemail-System nach dem vorhergehenden Anspruch, wobei das Voicemail-System eine Benutzer-App umfasst, die zur Installation auf einem Smartphone (80) geeignet ist.

5. Voicemail-System nach dem vorhergehenden Anspruch, wobei die Benutzer-App die Voicemail-Aktivierungs- und Deaktivierungsfunktion enthält.

6. Voicemail-System nach dem vorhergehenden Anspruch, wobei die Benutzer-App eine Funktion zur Synchronisation der Liste von Video- und Audio-Nachrichten enthält.

7. Voicemail-System nach dem vorhergehenden Anspruch, wobei die Benutzer-App die VolP-Anruffunktion mit dynamischer Nummer enthält.

## Revendications

1. Système de messagerie vocale centralisée et à distance comprenant un terminal externe (70) apte à être installé à l'extérieur d'une habitation (20) ; un terminal de réception interne (60) apte à être installé à l'intérieur de ladite habitation (20) et fourni avec une messagerie vocale à communication VolP et associé avec un serveur push (40), le système étant configuré pour réaliser les étapes suivantes :
- recevoir, au moyen d'un terminal de réception interne (60), un appel provenant du terminal externe (70) ;
- envoyer, au moyen du terminal de réception interne (60), au terminal externe (70) un message de réponse automatique à l'appel susmentionné, dans le cas où l'appel susmentionné ne reçoive pas de réponse de la part d'un utilisateur dans un intervalle de temps prédéterminé ;
- stocker un message audio/vidéo provenant du terminal externe (70) dans un fichier de messagerie vocale ;
- stocker le fichier de messagerie vocale dans le terminal de réception interne (60) ;
- envoyer une notification push à l'utilisateur au moyen du serveur push (40) pour notifier la présence d'un message audio/vidéo dans le fichier de messagerie vocale, ladite notification push comprenant un numéro de téléphone dynamique à appeler pour accéder au fichier de messagerie vocale stocké, le système étant en outre configuré pour permettre l'accès à distance de la part de l'utilisateur au message audio/vidéo dans le fichier de messagerie vocale au moyen d'un appel VolP au numéro de téléphone dynamique.

2. Système de messagerie vocale selon la revendication 1, dans lequel le fichier de messagerie vocale est stocké sur un serveur cloud (10).

3. Système de messagerie vocale selon l'une quelconque des revendications précédentes, dans lequel le serveur push (40) est intégré dans le serveur cloud (10).

4. Système de messagerie vocale selon la revendication précédente, dans lequel le système de messagerie vocale comprend une application utilisateur apte à être installée sur un smartphone (80).

5. Système de messagerie vocale selon la revendication précédente, dans lequel l'application utilisateur contient la fonction d'activation et désactivation de la messagerie vocale.

6. Système de messagerie vocale selon la revendication précédente, dans lequel l'application utilisateur contient une fonction pour synchroniser la liste de messages vidéo et audio.

7. Système de messagerie vocale selon la revendication précédente, dans lequel l'application utilisateur contient la fonction d'appel VolP à un numéro dynamique.
